Europäisches Patentamt

European Patent Office

Office européen des brevets

(19)

(11) Publication number: **0 339 144**
**A1**

(12) **EUROPEAN PATENT APPLICATION**

(21) Application number: **88302896.1**

(51) Int. Cl.⁴: **B01J 13/02**

(22) Date of filing: **31.03.88**

(43) Date of publication of application:
**02.11.89 Bulletin 89/44**

(84) Designated Contracting States:
**DE FR GB IT**

(71) Applicant: **TOPPAN MOORE COMPANY, LTD.**
**6, Kandasurugadai 1-chome**
**Chiyoda-ku, Tokyo 101(JP)**

(72) Inventor: **Moriwaki, Masafumi**
**4808, Uenohara Uenohara-machi**
**Kitatsuru-gun Yamanashi-ken(JP)**
Inventor: **Sekihara, Hiroyuki**
**3-11, Asahigaoka 6-chome**
**Hino-shi Tokyo-to(JP)**
Inventor: **Etoh, Kei**
**46-5, Yamato-cho 4-chome**
**Nakano-ku Tokyo-to(JP)**

(74) Representative: **Allard, Susan Joyce et al**
**BOULT, WADE & TENNANT 27 Furnival Street**
**London EC4A 1PQ(GB)**

(54) A method for the preparation of microcapsules.

(57) In a process for manufacturing microcapsules by dispersing a water-insoluble core material in an aqueous medium and forming capsule walls in the surface of the thus dispersed particles of the core material, the core material is admixed prior to dispersing in the aqueous medium with a liquid additive material having miscibility with both of the core material and the aqueous medium. When the liquid additive is a polyhydric compound or a water-soluble epoxy compound, the capsule walls may be imparted with somewhat decreased denseness as a result of permeation of a part of the additive through the capsule walls to give sustained releasability of the core material therethough. When the additive is a water-soluble resinous material susceptible to subsequent curing, the capsule walls can be imparted with improved resistance against heat, water, and solvents by subjecting the microcapsules as produced subsequently to a curing treatment of the additive retained in the capsule walls.

EP 0 339 144 A1

# A METHOD FOR THE PREPARATION OF MICROCAPSULES

The present invention relates to an improved method for the preparation of microcapsules. More particularly, the invention relates to a method for the preparation of microcapsules having specifically designed capsule walls having high denseness and an excellent resistance to heat, water and solvents to satisfy various requirements in particular applications, as well as sustained releasability of the core material encapsulated by the capsule walls in respect of the duration of the release, the start of the release and the amount of the core material released.

Microcapsules are collective particles, each particle of which has a core material encapsulated by a capsule wall. Various types of core materials are widely used in the formation of microcapsules including coating materials for pressure-sensitive transfer papers, medicines, agricultural chemicals, perfumes, adhesives, enzymes, pigments, dyes and solvents.

Several methods are known and practiced for the manufacture of microcapsules including the so-called interfacial polymerization method, in-liquid cure-coating method, in situ polymerization method and coacervation method. The interfacial polymerization method is a method in which a solution of a hydrophobic monomer in a solvent immiscible with water is finely dispersed in water and the polymerization of the monomer is effected at the interface between the aqueous phase and the water-immiscible solvent to form the capsule walls. In the in-liquid cure-coating method, an organic solution of a hydrophobic polymer is introduced in a finely dispersed state into a coagulating bath and cured therein to form capsule walls. In the third method of in situ polymerization, the core material is introduced into a dispersion medium in a finely dispersed state so that the polymerizable monomer contained either in the core material or in the liquid medium is polymerized at the interface between the dispersed phase and the medium to form the capsule walls. In the last mentioned coacervation method, an aqueous solution of a water-soluble polymer containing the core material finely dispersed therein is admixed with a water-miscible solvent which is a non-solvent for the polymer so that capsule walls of the polymer are formed on the surface of the dispersed phase of the core material.

Various types of polymeric materials may be used for the capsule walls, including natural polymers such as gelatin and gum arabic and synthetic polymers such as polyamides, polyurethanes, polyesters, polysulfonamides, polyureas, polysulfonates, polycarbonates, epoxy resins, ureaformaldehyde resins and melamine-formaldehyde resins.

Together with the rapid expansion of the field of application of microcapsules in recent years, the requirements for microcapsule products are being increasingly upgraded and diversified. One of these requirements is the so-called sustained releasability of the core material encapsulated in the capsule walls through which the core material is gradually released from the microcapsules to sustainedly exhibit the desired effects expected of the core material. No practical inherent methods, however, are known in the prior art to impart sustained releasability to the capsule walls of microcapsules so that such a requirement must be satisfied by using a blend of two or more different types of microcapsule products having capsule walls of different solublity or having capsule walls of different thicknesses. Such a method is, however, far from industrial practicability because of the great deal of labour and costs in the preparation of the blend.

Apart from the above-mentioned requirement for sustained releasability, microcapsules in general are required to have an increasingly improved resistance against heat, moisture and solvents, as well as an increased durability. Several proposals and attempts have been made hitherto in this regard including a method in which a specific monomeric ingredient is used in the monomer mixture from which the copolymer forms the capsule walls having the desired properties, a method in which the reaction conditions for the formation of the capsule walls are adequately controlled so as to impart the desired properties to the capsule walls formed thereby and a method in which the surface of the microcapsules produced in a known method is further overcoated with a different coating material to modify the properties of the capsule walls as a whole.

The first mentioned method above depending on the proper selection of the comonomer is disadvantageous because the optimum formulation of the monomer mixture can be obtained only by undertaking extensive experimentation on the types and combinations of the comonomers in a proper proportion in order to obtain substantial improvements in the properties of the capsule walls. The second mentioned method depending on the control of the reaction conditions is also disadvantageous because the optimum reaction conditions can be established only after extensive trial-and-error experimentation and, in addition, the thus found optimum reaction conditions are usually very narrowly restricted with little versatility and are not suitable for the control of the reaction conditions in an industrial process. The last mentioned method of overcoating is defective because satisfactory improvements cannot be obtained if the coating is incomplete, not to mention the necessary increase in cost due to the additional process of overcoating on the once finished microcapsule product.

We have now developed an improved method for the preparation of a microcapsule product in which the capsule walls impart a sustained releasability to the core material encapsulated therein through the capsule walls, and for the preparation of a microcapsule product having an excellent resistance against heat, water and solvents and having highly densified capsule walls with well controlled properties.

Accordingly, the present invention provides a method for the preparation of microcapsules which comprises dispersing a water-insoluble core material in an aqueous medium and forming capsule walls on the dispersed particles of the water-insoluble core material, the water-insoluble core material being admixed prior to dispersion in the aqueous medium with a liquid additive which is miscible both with the aqueous medium and the water-insoluble core material.

The above mentioned liquid additive to the water-insoluble core material which is miscible both with the aqueous medium and the core material is selected, on one hand, from the group consisting of polyhydroxy compounds, such as polyhydric alcohols and polyalkylene glycols, and water-soluble epoxy resins when an improvement is desired in the sustained releasability of the capsule walls.

The above mentioned liquid additive to the water-insoluble core material is, on the other hand, a liquid resinous material susceptible to subsequent curing, such as prepolymers of phenol-formaldehyde condensation reaction and the like, when substantial improvements are desired in the resistance of the microcapsules to heat, water and solvents.

The improvements in the properties of microcapsules is achieved by the admixture of the water-insoluble core material prior to dispersion in an aqueous medium with a specific additive which is miscible with both the aqueous medium and the water-insoluble core material.

When the desired improvement is in the sustained releasability of the microcapsules, the additive is a water-soluble polyhydric compound or an epoxy resin. When the core material containing such an additive is dispersed in an aqueous medium and a capsule wall is then formed on the dispersed particle of the core material, the additive contained in the core material is partly dissolved out in the aqueous medium during the capsule wall formation, resulting in somewhat decreased denseness of the capsule walls. Therefore, control of the sustained releasability can be achieved by suitably selecting the amount of the additive transferred from the core material to the aqueous medium.

When the desired improvement is in the resistance of the microcapsules to heat, water and solvents, on the other hand, the additive is a liquid resinous material which is miscible both with the water-insoluble core material and the aqueous medium, and which is susceptible to subsequent curing. When the curable additive resin is subjected to curing after the capsule walls have been formed on the dispersed core material, the capsule walls can be substantially reinforced by the cured resinous ingredients so that the microcapsules thus produced can be imparted with an improved resistance to heat, water and solvents as desired.

The method for forming capsule walls on the dispersed phase of the core material is not particularly limited and can be any of known methods, including the interfacial polymerization method, in-liquid cure-coating method, in situ polymerization method and coacervation method. It will be appreciated that the core material finely dispersed in the aqueous dispersion medium must be water-insoluble. Examples of core materials to which the present invention is applicable include water-immiscible organic solvents, oil-soluble inks, water-insoluble medicines, water-insoluble agricultural chemicals and water-insoluble adhesives.

Various types of polymeric materials can be used as the material for forming the capsule walls according to the invention, including natural polymers such as gelatin and gum arabic and synthetic polymers such as polyamides, polyurethanes, polyesters, polysulfonamides, polyureas, polysulfonates, polycarbonates, epoxy resins, urea-formaldehyde resins and melamine-formaldehyde resins. A particularly preferred polymeric material for the capsule walls is a reaction product of a methylolated melamine or methylolated urea and a copolymer of styrene and maleic anhydride after partial hydrolysis with an alkali.

The liquid additive added to the above mentioned water-insoluble core material, prior to dispersion in the aqueous dispersion medium, should be miscible with both the core material and the aqueous medium. Various classes of materials can meet this criterion, including polyhydric compounds such as polyhydric alcohols, e.g., glycerin, and polyalkylene glycols, and water-soluble epoxy resins, on the one hand, and water-soluble resinous materials susceptible to subsequent curing, on the other hand. The water-soluble resinous material which is miscible with both the core material and the aqueous medium is exemplified by thermosetting resinous materials such as prepolymers formed by the condensation reaction of phenol and formaldehyde, prepolymers formed by the condensation reaction of melamine and formaldehyde, and prepolymers formed by the condensation reaction of melamine and formaldehyde, and prepolymers formed by the condensation reaction of a ketone and formaldehyde, polymers curable by radiation, e.g., electron

3

beam-irradiation, such as polyvinylalcohols and copolymers of vinyl alcohol and vinyl acetate, polymers curable by chemical reaction such as polyurethane prepolymers and photocurable resinous materials such as water-soluble resins containing a diazide compound.

According to a typical and preferred embodiment of the invention, a water-insoluble core material is first admixed with the liquid additive and the mixture is finely dispersed in an aqueous medium followed by the formation of capsule walls on the surface of the dispersed particles of the core material. In the course of the capsule wall formation, the liquid additive, such as the polyhydric compounds and water-soluble epoxy resins having miscibility with the aqueous medium contained in the core material is at least partly dissolved out into the aqueous medium to somewhat disturb densification of the capsule walls so that the releasability of the core material through the capsule walls can be adequately controlled by suitably selecting the type and amount of the liquid additive.

When the liquid additive is a water-soluble resinous material susceptible to subsequent curing, on the other hand, a substantial amount thereof is retained in the capsule walls even after a part of the additive has been dissolved out through the capsule walls into the aqueous medium so that curing of the additive in the capsule walls can be undertaken subsequently by suitable means, such as heating, irradiation with light or reaction with a curing agent, to increase the denseness of the capsule walls. Accordingly, the microcapsules thus produced can be provided with a greatly improved and controlled resistance to heat, water and solvents and with denser capsule walls, as well as with other desirable properties, by suitably selecting the type and amount of the curable liquid additive.

The amount of the liquid additive added to the core material is usually in the range of from 0.1 to 20 parts by weight per 100 parts by weight of the core material, although the optimum amount thereof depends on various factors including the distribution coefficient of the additive material between the core material and the aqueous medium and the desired characteristics of the capsule walls such as denseness and sustained releasability of the core material.

In the following, a typical procedure to practice the inventive method is described by way of an example in which the capsule walls are formed from the reaction product of a methylolated malamine or methylolated urea and a copolymer of styrene and maleic anhydride partially hydrolyzed with an alkali. In the first place, a copolymer of styrene and maleic anhydride is dispersed in an aqueous medium and partially hydrolyzed to provide the desired degree of hydrolysis by keeping the mixture, with addition of an appropriate amount of an alkali, at a temperature in the range from 20 to 100 °C followed by adjustment of the solid content of the aqueous solution in a range from 0.5 to 20% by weight. Thereafter, a water-insoluble core material containing the liquid additive is added to and dispersed or emulsified in the aqueous solution by vigorous agitation or ultrasonic vibration. The weight of the core material is usually in the range of from 5 to 50 times the weight of the partial hydrolysis product of the styrene/maleic anhydride copolymer. Dispersion or emulsification of the core material is usually terminated within a period of from 1 to 30 minutes depending on the distribution coefficient of the liquid additive between the core material and the aqueous medium, the desired characteristics of the capsule walls, the efficiency of the agitating means and so on.

Then, an aqueous solution of a methylolated melamine or methylolated urea is added to the thus obtained aqueous dispersion or emulsion of the core material in an aqueous medium containing the partially hydrolyzed styrene/maleic anhydride copolymer and the mixture having a pH adjusted to 3 to 7 is agitated for from 30 to 180 minutes at a temperature of from 40 to 90 °C to effect the reaction between the methylolated melamine or urea and the partially hydrolyzed copolymer thereby forming capsule walls on the surface particles of the core material. The above mentioned weakly acidic conditions of pH 3 to 7 can be obtained by adding a suitable acid, such as citric acid, to the mixture. The amount of the methylolated melamine or urea added to the aqueous medium is usually in the range of from 10 to 100 parts by weight per 100 parts by weight of the partially hydrolyzed styrene/maleic anhydride copolymer. The capsule walls thus formed by the reaction of the methylolated melamine or urea and the partially hydrolyzed copolymer have controlled denseness depending on the type and amount of the liquid additive added to the core material to satisfy the particular requirements for the microcapsule product, such as sustained releasability of the core material and improvements in the resistance to heat, water and solvents.

In the following, examples and comparative examples are given to illustrate the method of the present invention in more detail but not to limit the scope of the invention in any way. In the examples and comparative examples described below the solvent resistance of the microcapsules was evaluated according to the following test procedure. Thus 0.5 g of the dehydrated and dried microcapsules was admixed with 20 ml of an organic solvent, which was ethyl alcohol or tetrahydrofuran, and agitated therein for 30 hours at 25 °C using an ultrasonic cleaner followed by gas chromatographic determination of the amount of the core material dissolved in the solvent. The solvent resistance was given by the percent value of the dissolved amount of the core material relative to the overall amount thereof in the dry microcapsules taken, a smaller percentage indicating better solvent resistance.

Comparative Example 1

A 5% by weight aqueous solution of a partially hydrolyzed styrene/maleic anhydride copolymer was prepared by heating 100 g of a 1:1 by moles copolymer of styrene and maleic anhydride (Scriptset 520, a product of Monsanto Co.) in water with addition of 0.17 mole of sodium hydroxide. A 300 g portion of the aqueous solution was admixed with 300 g of dimethyl phthalate as the core material which was emulsified in the aqueous solution by vigorously agitating for 2 minutes. The aqueous emulsion was heated at 60°C on a water bath with agitation and 120 g of a liquid melamine resin (Sumirez Resin 607 Syrup, a product of Sumitomo Chemical Co.) were added thereto followed by further continued agitation for additional two hours at the same temperature to give a slurry of microcapsules.

The solvent resistance of the thus prepared microcapsules as dried is shown in Table 1 below.

Comparative Example 2

A mixture of 120 g of isopropyl naphthalene (KMC-113, a product of Kureha Chemical Co.) and 13 g of terephthalic chloride was added to 300 g of a 2% by weight aqueous solution of a polyvinyl alcohol and emulsified therein by agitating for 2 minutes. Then, an aqueous solution of 4 g of sodium carbonate and 8 g of diethylene triamine in 80 g of water was gradually added to the emulsion under agitation followed by continued agitation for 24 hours to give a slurry of microcapsules.

The solvent resistance of the thus prepared microcapsules as dried is shown in Table 1 below.

Examples 1 and 2

The experimental procedure in each of Examples 1 and 2 was substantially the same as in Comparative Example 1 described above except that 300 g of dimethyl phthalate as the core matedrial was admixed with 1 g of a water-soluble epoxy compound (Denacol EX 611, a product by Nagase Chemical Co.) and the time taken for the emulsification treatment of the core material was extended from 2 minutes to 5 minutes (Example 1) or 10 minutes (Example 2).

The solvent resistance of the thus prepared microcapsules as dried is shown in Table 1 below.

Example 3

The experimental procedure was substantially the same as in Comparative Example 1 described above except that 300 g of dimethyl phthalate as the core material were admixed with 5 g of a water-soluble epoxy compound (Denacol EX 611, supra) and the time taken for the emulsification treatment of the core material was extended from 2 minutes to 20 minutes.

The solvent resistance of the thus prepared microcapsules as dried is shown in Table 1 below.

Examples 4 and 5

The experimental procedure in each of Examples 4 and 5 was substantially the same as in Comparative Example 2 described above except that 120 g of isopropyl naphthalene as the core material were admixed with 1 g of a water-soluble epoxy compound (Denacol EX 611, supra) and the time taken for the emulsification treatment of the core material was extended from 2 minutes to 5 minutes (Example 4) or 10 minutes (Example 5).

The solvent resistance of the thus prepared microcapsules as dried is shown in Table 1 below.

Example 6

5

The experimental procedure was substantially the same as in Comparative Example 2 described above except that 120 g of isopropyl naphthalene as the core material were admixed with 5 g of a water soluble epoxy compound (Denacol EX 611, supra) and the time taken for the emulsification treatment of the core material was extended from 2 minutes to 20 minutes.

The solvent resistance of the thus prepared microcapsules as dried is shown in Table 1 below.

Table 1

| | Epoxy compound added, g | Time for emulsification, minutes | Solvent resistance, %, in | |
|---|---|---|---|---|
| | | | tetrahydrofuran | ethyl alcohol |
| Comparative Example 1 | 0 | 2 | 7.5 | 100 |
| Example 1 | 1 | 5 | 5.6 | 26.4 |
| Example 2 | 1 | 10 | 2.8 | 4.2 |
| Example 3 | 5 | 20 | 100 | 100 |
| Comparative Example 2 | 0 | 2 | 90 | 100 |
| Example 4 | 1 | 5 | 17.3 | 46.4 |
| Example 5 | 1 | 10 | 8.5 | 6.9 |
| Example 6 | 5 | 20 | 100 | 100 |

Examples 7 to 9

The experimental procedure in each of Examples 7, 8 and 9 was substantially the same as in Comparative Example 1 described above except that 300 g of dimethyl phthalate as the core matedrial were admixed with 1.5 g, 3.0 g and 9.0 g, respectively, of a water-soluble carboxyvinyl polymer (Hivis Wakol 103, a product by Wako Junyaku Co.) and the microcapsules as formed were subsequently subjected to a heat treatment at 180° C for 60 seconds.

The solvent resistance of the thus prepared microcapsules as dried is shown in Table 2 below, in which the results obtained in Comparative Example 1 are also given to facilitate comparison.

Examples 10 to 12

The experimental procedure in each of Examples 10, 11 and 12 was substantially the same as in Comparative Example 2 described above except that 120 g of isopropyl naphthalene as the core material were admixed with 1.5 g, 3.0 g and 9.0 g, respectively, of a water-soluble carboxyvinyl polymer (Hivis Wakol 103, supra) and the microcapsules as formed were subsequently subjected to a heat treatment at 180 ° C for 60 seconds.

The solvent resistance of the thus prepared microcapsules as dried is shown in Table 2 below, in which the results obtained in Comparative Example 2 are also given to facilitate comparison.

6

Table 2

|  | Carboxyvinyl polymer added, g | Solvent resistance, %, in | |
|---|---|---|---|
|  |  | tetrahydrofuran | ethyl alcohol |
| Comparative Example 1 | 0 | 7.5 | 100 |
| Example 7 | 1.5 | 7.0 | 63.1 |
| Example 8 | 3 | 2.3 | 50.7 |
| Example 9 | 9 | 1.7 | 25.2 |
| Comparative Example 2 | 0 | 90 | 100 |
| Example 10 | 1.5 | 78.5 | 83.1 |
| Example 11 | 3 | 33.5 | 70.7 |
| Example 12 | 9 | 13.8 | 45.2 |

Examples 13 to 18

The experimental procedure in each of these Examples was substantially the same as in Examples 1 to 6, respectively, excepting replacement of the epoxy compound with glycerin in an amount indicated in Table 3 below. The results of testing for the solvent resistance of the microcapsule products using tetrahydrofuran and acetone as the test solvents are shown in Table 4 together with the results obtained with the microcapsule products prepared in Comparative Examples 1 and 2.

Table 3

|  | Glycerin added, g | Time for emulsification, minutes | Solvent resistance, %, in | |
|---|---|---|---|---|
|  |  |  | tetrahydrofuran | acetone |
| Comparative Example 1 | 0 | 2 | 7.5 | 60.5 |
| Example 13 | 1 | 5 | 25.0 | 78.3 |
| Example 14 | 1 | 10 | 73.3 | 100 |
| Example 15 | 5 | 20 | 100 | 100 |
| Comparative Example 2 | 0 | 2 | 90 | 47.7 |
| Example 16 | 1 | 5 | 100 | 63.9 |
| Example 17 | 1 | 10 | 100 | 93.8 |
| Example 18 | 5 | 20 | 100 | 100 |

7

**Claims**

1. A method for the preparation of microcapsules which comprises dispersing a water-insoluble core material in an aqueous medium and forming capsule walls on the dispersed particles of the water-insoluble core material, the water-insoluble core material being admixed prior to dispersion in the aqueous medium with a liquid additive which is miscible both with the aqueous medium and the water-insoluble core material.

2. A method as claimed in claim 1 wherein the liquid additive is a polyhydroxy compound or a water-soluble epoxy compound.

3. A method as claimed in claim 1 wherein the liquid additive is a liquid resinous material susceptible of subsequent curing.

4. A method as claimed in any one of the preceding claims wherein the amount of the liquid additive with which the water-insoluble core material is mixed is in the range of from 0.1 to 20 parts by weight per 100 parts by weight of the water-insoluble core material.

5. A method as claimed in claim 2 wherein the liquid additive is a water-soluble epoxy resin.

6. A method as claimed in claim 2 wherein the liquid additive is glycerin.

7. A method as claimed in any one of the preceding claims wherein the water-insoluble core material admixed with the liquid additive is dispersed in the aqueous medium by agitating for from 1 to 30 minutes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 083 121  (FUJI PHOTO FILM CO.)<br>* Page 2, lines 18-34; page 8, lines 11-40; page 9, lines 1-10; page 11, lines 10-39 *<br>--- | 1,2,4 | B 01 J  13/02 |
| X | DE-A-2 043 556  (FUJI PHOTO FILM CO.)<br>* Page 25, paragraph 1; page 5, paragraph 3; page 14, paragraphs 4,5 *<br>--- | 1,2,4,6 | |
| A | FR-A-2 084 199  (FARBENFABRIKEN BAYER)<br>* Page 2, lines 10-22; page 3, lines 16-21; page 6, lines 10-24 *<br>--- | 1 | |
| A | FR-A-2 084 200  (FARBENFABRIKEN BAYER)<br>* Page 2, lines 20-34; page 6, lines 15-35 *<br>----- | 1,6,7 | |
| | | | TECHNICAL FIELDS SEARCHED (Int. Cl.4) |
| | | | B 01 J<br>A 61 K<br>B 41 M |

| | | | |
|---|---|---|---|
| The present search report has been drawn up for all claims | | | |
| Place of search<br>THE HAGUE | Date of completion of the search<br>21-10-1988 | Examiner<br>KERRES P.M.G. | |